# EUROPEAN PATENT APPLICATION

(11) **EP 2 518 863 A1**
(43) Date of publication of application: **31.10.2012**
(21) Application number: 11163850.8
(22) Date of filing: 27.04.2011
(51) Int. Cl.: H02J 17/00, H04B 1/16, H04B 5/00, H04B 7/00

(54) **Methods and apparatuses for wireless power transfer**

(71) Applicant: Research In Motion Limited, Waterloo, ON N2L 3W8 (CA)
(72) Inventor: Deluca, Michael Joseph, Rolling Meadows, IL 60008 (US)
(74) Representative: Roberts, Gwilym Vaughan

(57) **Abstract**

This document discusses, among other things, a method for providing wireless power from a power providing device to a portable electronic device. The method includes generating a wireless power signal as a beam having a propagation path directed toward the portable electronic device. The beam can be generated based on parameters for an incoming signal received from the portable electronic device. The wireless power signal can be received by a portable electronic device and converted into operating power for the portable electronic device.

## Description

### BACKGROUND

Portable electronic devices typically receive energy from an internal power pack such as a battery. These internal power packs enable the portable electronic devices to be operated free of a wired connection to a power source. Internal power packs, however, typically provide (or supply) only a limited quantity of power and therefore have to be replenished.

One common type of internal power pack, a battery, can be recharged by coupling the portable electronic device with an external power source. This coupling is traditionally accomplished by physically connecting a cable to both the portable electronic device and the external power source. More recently, however, inductive charging devices have been developed in order to reduce the inconvenience of having to physically connect a cable to recharge the battery. In inductive charging systems, an inductive coil in the power providing device is used to induce a current in an inductive coil of the portable electronic device, similar to the operation of a transformer.

The energy transfer in inductive charging occurs in the near-field. In the near-field, energy can also be referred to as "non-radiating" energy, because energy in the near-field is stored in the electromagnetic field and only drawn out when a conductor (e.g., a coil in the portable electronic device) is within the near-field region. When a conductor is not present, the energy remains in the electromagnetic field and is not drawn (removed) from the source. The near-field can be roughly defined as the region within one wavelength of the source, or the region at a distance less then 2D²/λ from the source where D is the largest dimension of the source of the radiation. Since inductive charging relies on energy in the near-field, inductive charging has a short range and typically requires the portable electronic device to be located in a specific location relative to the power providing device, on a charging pad for example.

In contrast to the near-field, in the far-field, energy propagates from a source of an electromagnetic field regardless of whether there is a conductor within the field. Inductive charging transfers very little, if any, energy in the far-field. Far-field energy propagates for an infinite distance and, therefore, can also be referred to as "radiating" energy. The energy available in the far-field falls off in amplitude by 1/r distance from the source. The far-field can be roughly defined as the region more than two wavelengths away from the source, or the region at a distance greater than 2D²/λ from the source where D is the largest dimension of the source of the radiation.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.

FIG. 1 illustrates generally an example block diagram of system for providing wireless power.

FIG. 2 illustrates generally an example block diagram of the power providing device of FIG. 1.

FIG. 3 illustrates generally an example block diagram of a portable electronic device of FIG. 1.

FIG. 4 illustrates generally an example flow chart for providing power in the system of FIG. 1

### DETAILED DESCRIPTION

The present inventor has recognized, among other things, a method for providing wireless power to a portable electronic device using beam-forming techniques. Using an antenna array, a power providing device can wirelessly send (or transmit) a beam of spatially directed radiation along a propagation path toward the portable electronic device. The portable electronic device can then convert the beam of radiation into operating power for the portable electronic device. The operating power can be used to directly power components on the portable electronic device and/or can be used to charge an internal power pack such as a battery. Sending the radiation as a beam can increase the (useful) radiation received by the charged device and reduce spurious (wasteful) radiation.

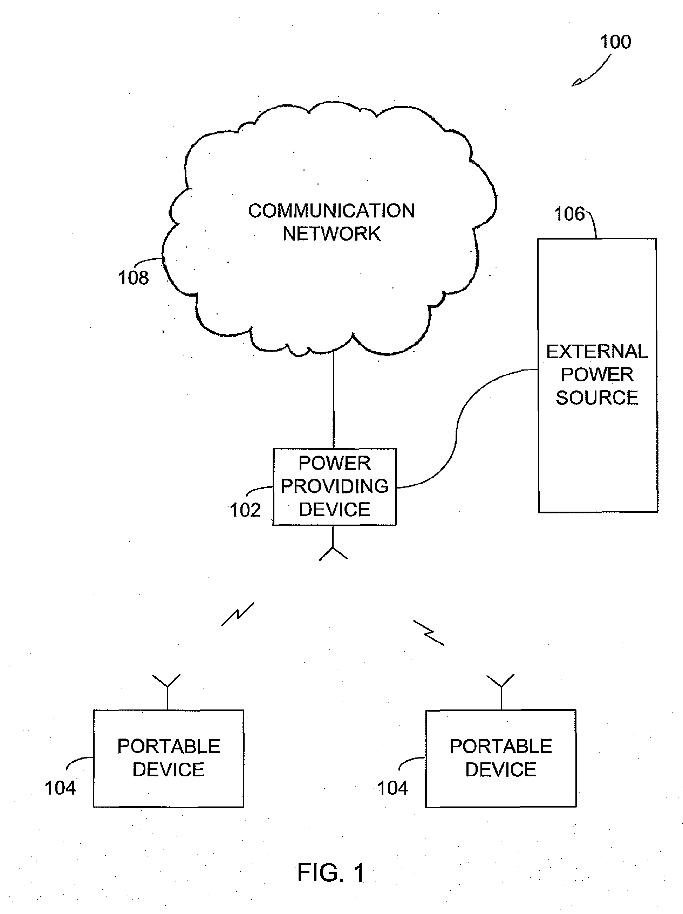

FIG. 1 illustrates generally a block diagram of an example system 100 for providing wireless power from a power providing device 102 to one or more portable electronic devices 104. The power providing device 102 can be configured to provide the wireless power by generating one or more beams of electromagnetic radiation for propagation through the air to the one or more portable electronic devices 104 (e.g., wireless transmission). The beams of electromagnetic radiation can be used to transfer energy in the far-field with respect to the power providing device 102. The one or more portable electronic devices 104 can be configured to sense the radiation and convert the radiation into operating power. As used herein, a component or device is generally "configured" to perform a function when the component or device is capable of carrying out the function.

In an example, the power providing device 102 can be configured to adaptively change the direction of one or more beams in order to achieve better reception of the one or more beams in the presence of moving portable electronic devices 104 and other environmental changes that affect the propagation path between the power providing device 102 and the portable electronic device 104. The power providing device 102 can adaptively change the direction by adjusting the phase and magnitude of signals sent to different antennas in the antenna array 202.

In addition to wireless power signals, the power providing device 102 can also be configured to send communication signals, that is, signals with data modulated thereon, to the one or more portable electronic devices 104. In some examples, the power providing device 102 can use the wireless power signal as a carrier wave for sending information, such that the information is modulated on the wireless power signal. Accordingly, a wireless power signal can also be used as a communication signal. In other examples, distinct signals can be used for communication and power. In some examples, the communication signal, when distinct from the wireless power signal, can be an omni-directional signal. In other examples, the communication signal can be sent using adaptive beam-forming techniques in a manner similar to the wireless power signal. In an example, an omni-directional signal comprises a signal that is transmitted equally in all directions within, for example, a horizontal plane. In contrast a beam-formed signal is spatially directed within, for example, the horizontal plane such that the radiation from the signal is focused in a given direction.

The power providing device 102 can be coupled to an external power source 106 to obtain operating power therefrom. The external power source 106 can include alternating current (AC) line power, a universal serial bus (USB) port on a computer, or other power source. In general, "coupled" as used herein can refer to a physical relation of components such that one coupled component can send and/or receive signals or power to/from another coupled component. Components that are electrically or communicatively coupled may be, but need not be, in physical contact with or proximate to one another.

The portable electronic device 104 can be configured to receive the wireless power signal and convert the wireless power signal into operating power for components on the portable electronic device 104. In some examples, the portable electronic device 104 can also be configured to transmit and receive communication signals with the power providing device 102.

In some examples, the power providing device 102 and the portable electronic device can be configured to operate in accordance with one or more frequency bands and/or standards profiles. For example, the power providing device 102 and the portable electronic device 104 can be configured to communicate in accordance with an Institute for Electronics and Electrical Engineers (IEEE) 802.11 standard (e.g., the IEEE 802.11ac standard for multi-user, multiple-input multiple output (MU-MIMO)). Accordingly, in some examples, the power providing device 102 can be communicatively coupled to a communication network 108 (e.g., the internet) and can act as a wireless access point for the portable electronic device 104. In other examples, the power providing device 102 and the portable electronic device 104 can be configured to communicate in accordance with Global System for Mobile Communications (GSM), 3rd Generation Partnership Project (3GPP), 3rd Generation Partnership Project 2 (3GPP2), or an IEEE 802.16 standard. The subject matter described herein, however, is not limited to any particular frequency band or standard.

In some examples, the power providing device 102 and the portable electronic device 104 can be configured to transmit and receive communication signals as orthogonal frequency division multiplexed (OFDM) signals which comprise a plurality of orthogonal subcarriers. In broadband multicarrier examples, the power providing device 102 and the portable electronic device 104 can be configured to communicate in accordance with an orthogonal frequency division multiple access (OFDMA) technique. The subject matter described herein, however, is not limited to any particular communication technique. Accordingly, in other examples, the power providing device 102 and the portable electronic device 104 can be configured to communicate using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation.

In an example, the wireless power signal can be a simple sine wave, however, in some examples, as mentioned above, the wireless power signal can be a wave modulated with data such that the wireless power signal is also a communication signal.

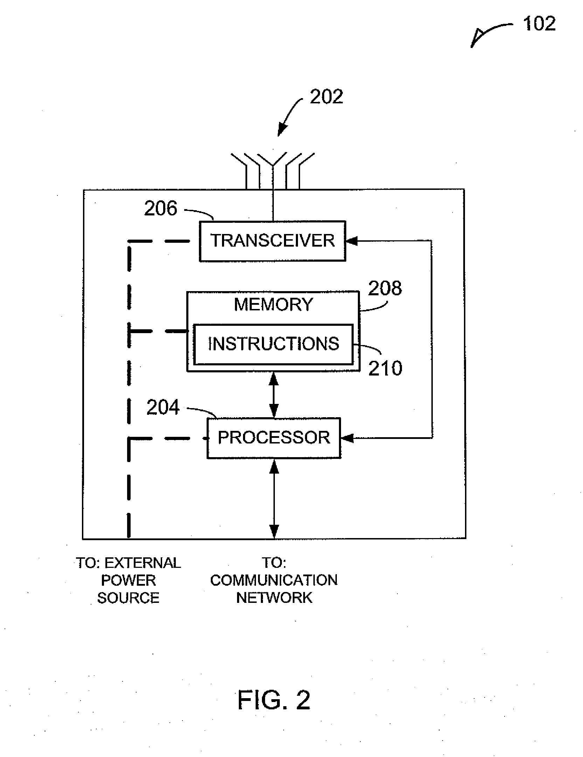

FIG. 2 illustrates generally a block diagram of an example power providing device 102. The power providing device 102 can include an antenna array 202 for propagating beam-formed wireless power signals to the one or more portable electronic devices 104. The power providing device 102 also includes a processing device 204 and a radio frequency (RF) transceiver 206 for generating communication and/or wireless power signals for propagation from the antenna array 202. The power providing device 102 can include a memory 208 having a plurality of instructions 210 stored thereon for execution by the processing device 204. In an example, the antenna array 202 can comprise a smart antenna and the processing device 204 can be configured to control the power and phase of a signal sent to each antenna in the antenna array 202 in order to form a beam of radiation. Notably, the antenna array 202 can transmit both an omni-directional signal and a beam-formed signal depending on the magnitude and phase of the signal provided to each antenna in the antenna array 202. Moreover, in some examples the transceiver 206 can comprise a plurality of transmitters and receivers, where each transmitter and receiver is coupled to a different antenna of the antenna array 202. Accordingly, the processing device 204 can provide signals having different power and phase to different transmitters to effectuate beam-forming with the antenna array 202. Similarly, the plurality of receivers can receive signals from their respective antenna in the antenna array 202 which can then be combined to form a received signal. Additionally, the magnitude and phase at each receiver can be measured to determine a received direction of a signal sensed by the antenna array 202.

The processing device 204 can include any component capable of executing instructions 210. For example, the processing device 204 can include one or more central processing units (CPU), microprocessors (e.g., digital signal processors (DSPs)), network processors, microcontrollers, or field programmable gate arrays (FPGAs). As an example, the processing device 204 is "configured" to perform a function when the memory 208 includes instructions 210 which, when executed by the processing device 204, cause the processing device 204 to carry out the function. In some examples, the memory 208 is a non-transitory memory storage device or circuit, such as non-volatile RAM.

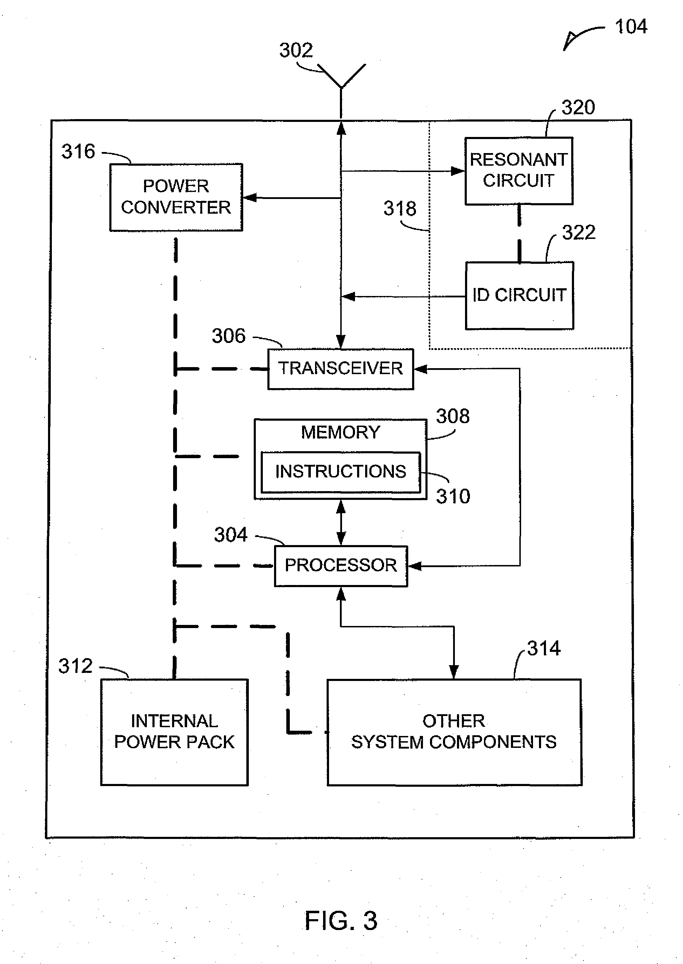

FIG. 3 illustrates generally a block diagram of an example portable electronic device 104. The portable electronic device 104 can include an antenna (or antenna array) 302 for sensing wireless power and/or communication signals from the power providing device 102. In an example, the antenna 302 is an omni-directional antenna capable of transmitting (or receiving) an omni-directional signal. The portable electronic device 104 can also include a processor 304 and an RF transceiver 306 for generating and receiving communication signals with the power providing device 102. The portable electronic device 104 can also include a memory 308 having a plurality of instructions 310 stored thereon for execution by the processor 304.

In some examples, the portable electronic device 104 can include an internal power pack 312 for providing operating power to the system components (e.g., processor 304, transceiver 306, memory 308, and other components 314) of the portable electronic device 104. The internal power pack 312 can include a rechargeable battery (e.g., a smart battery), a fuel cell, a fuel tank, or other portable power source. In addition, the portable electronic device 104 may be configured to be physically coupled to an external power source in order to, for example, recharge the internal power pack 312 and/or provide power to the system components in a non-portable form.

The processor 304 can include any component capable of executing instructions 310. For example, the processor 304 can include one or more central processing units (CPU), microprocessors (e.g., digital signal processors (DSPs)), network processors, microcontrollers, or field programmable gate arrays (FPGAs). As an example, the processor 304 is "configured" to perform a function when the memory 308 includes instructions 310 which, when executed by the processor 304, cause the processor 304 to carry out the function.

The portable electronic device 104 also includes a power converter 316 for converting a wireless power signal sensed at the antenna 302 into operating power for the system components (e.g., processor 304, transceiver 306, memory 308, and other components 314). The power converter 316 can include a rectifying circuit for generating a direct current (DC) voltage from a sine wave sensed at the antenna 302. The DC voltage can be supplied directly to the system components and/or when the internal power pack 312 is a battery, the DC voltage can be provided to the internal power pack 312 for charging.

In an example, the beam-formed signals sent by the power providing device 102 are generated using a time division duplex (TDD) beam-forming technique. TDD beam-forming involves determining the parameters for directing a beam to a portable electronic device 104 based on measured parameters of an incoming signal (also referred to herein as a "sync signal") from the portable electronic device 104 sensed at the antenna array 202 of the power providing device 102. In some examples, the sync signal and its corresponding outgoing beam-formed signal occur on the same frequency. Ideally, the sync signal and the beam-formed signal have the same, or very similar, propagation paths, such that the measured parameters for the sync signal correspond closely to ideal parameters for the beam-formed signal. For example, the measured parameters of the sync signal are based upon the received direction of the sync signal at the antenna array 202 of the power providing device 102. When the propagation paths for the sync signal and the outgoing beam-formed signal are similar, the beam-formed signal can be sent from the antenna array 202 in the opposite direction as the sync signal was received in order to take the same propagation path. Accordingly, the measured parameters of the sync signal corresponding to the received direction of the sync signal can be used as an indication of the direction to send the outgoing beam-formed signal.

In some examples, the sync signal can be actively generated by the RF transceiver 306 of the portable electronic device 104 using operating power from the internal power pack 312. In other examples, however, the sync signal can be generated passively based on energy from an incoming signal sensed by the portable electronic device 104. In order to generate the passive sync signal, the portable electronic device 104 includes a passive signal generating circuit 318. In an example, the passive signal generating circuit 318 is coupled to the antenna 302 and operates based on signals sensed on the antenna 302. In other examples, the passive signal generating circuit 318 transmits and/or receives signals from a second antenna (not shown) distinct from the antenna 302.

The passive signal generating circuit 318 is passive in that power from an incoming signal at the antenna 302 is required to cause the passive signal generating circuit 318 to generate an outgoing signal. That is, the passive signal generating circuit 318 cannot generate a signal autonomously based on power from the internal power pack 312. The passive signal generating circuit 318 can include a resonant circuit 320 (also called a resonator) tuned to the frequency or frequencies of an incoming signal in order to store energy from the incoming signal. The stored energy can be used to power an identification (ID) circuit 322 which uses the energy to transmit a sync signal from, for example, the antenna 302. In an example, the resonant circuit 320 includes an LC circuit, and, in some examples, the resonance circuit can be integral with the antenna 302.

Examples of the portable electronic device 104 include a personal digital assistant (PDA), a laptop computer, a web tablet, a net-book, a wireless telephone, a wireless headset, a pager, a electronic book reader, a digital camera, an access point, a television, a medical device (e.g., a heart rate monitor, a blood pressure monitor, etc.), a remote control (e.g., for a television), a wireless mouse for a computer, a wireless power tool, or an electric or hybrid car. The portable electronic device may be handheld, that is, sized and shaped to be held or carried in a human hand. The subject matter described herein, however, is not limited to any particular electronic device.

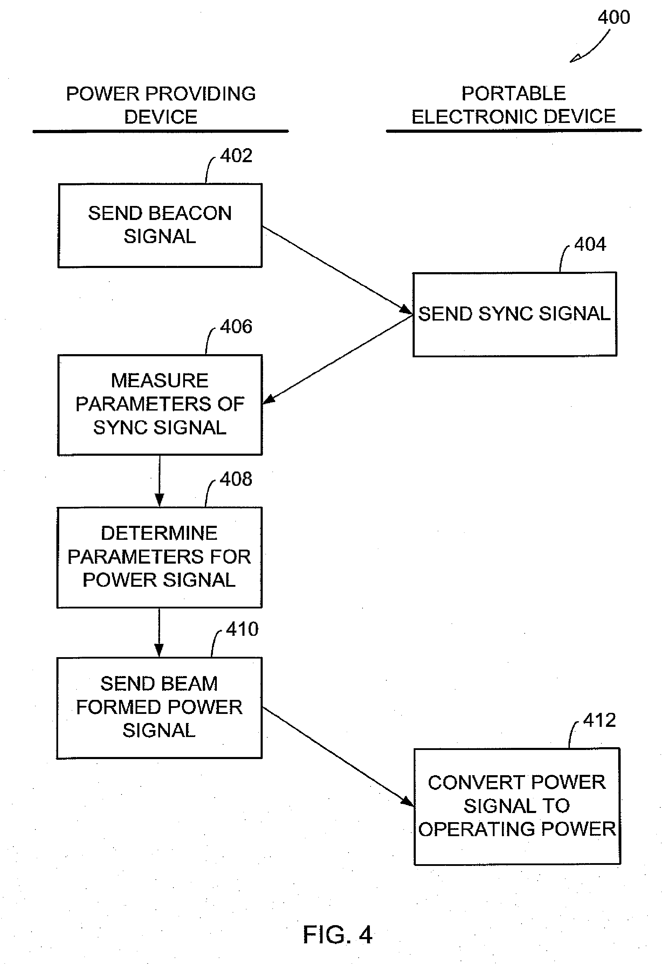

FIG. 4 illustrates a flow chart of an example method 400 for providing wireless power to the portable electronic device 104 from the power providing device 102. The method 400 provides for a TDD beam-forming technique, where the beam-formed signal is generated based on an incoming signal from the portable electronic device 104.

At block 402, a beacon signal is transmitted from the power providing device 102. In an example, the beacon signal is an omni-directional signal intended to be received by all portable electronic devices 104 within range. The beacon signal can be used to prompt the portable electronic devices 104 within range to respond with a sync signal that can be used by the power providing device 102 to measure parameters for beam-forming.

At block 404, the portable electronic device 104 senses the beacon signal and responds with a sync signal. In an example, the sync signal is an omni-directional signal. In some examples, the sync signal can include information such as identifying information corresponding to the portable electronic device 104. This identifying information can be used by the power providing device 102 to authenticate the portable electronic device 104 prior to providing power thereto.

As mentioned above, in some examples, the sync signal can be actively generated by the portable electronic device 104. Accordingly, upon receiving the beacon signal, the processor 304 can direct the transceiver 306 to transmit the sync signal from the antenna 302. Notably, this process of using the processor 304 and the transceiver 306 to send the sync signal is an active process since the processor 304 and the transceiver 306 can generate the sync signal with or without power from the incoming beacon signal received (e.g., with power stored in the internal power pack 312).

In other examples, however, the sync signal can be passively generated by the portable electronic device 104. For example, the resonant circuit 320 can be tuned to the frequency or frequencies of the beacon signal. Upon sensing the beacon signal at the antenna 302, the resonant circuit 320 can absorb energy from the beacon signal. This energy can be provided to the ID circuit 322 to power the ID circuit 322. The ID circuit 322 can then generate the sync signal and send the sync signal to the antenna 302 for propagation therefrom. Notably, the power used to generate the sync signal is acquired from the beacon signal, and no power is needed from the internal power pack 312. Accordingly, the passive signal generating circuit 318 enables the portable electronic device 104 to respond to the beacon signal without reducing the power stored in the internal power pack 312. This enables more efficient power reception from the power providing device 102 by reducing the power required of the portable electronic device 104 to initiate the wireless power transfer process. This can also simplify and reduce the cost of the power providing device 102 by eliminating the requirement for an active transmitter to send the sync signal to facilitate beam-forming.

At block 406, the power providing device 102 senses the sync signal and measures parameters from the sync signal. In an example, the power providing device 102 measures the magnitude and phase of the sync signal at each antenna of the antenna array 202 to determine the direction of reception of the sync signal. Measuring the parameters of a sensed signal at an antenna array is sometimes referred to as spatial estimation of the sensed signal.

Since the sync signal is sent from a single element antenna, and, for example, is a substantially omni-directional signal, the strongest signal received at the antenna array 202 should have traveled the best propagation path from the portable electronic device 104 to the power providing device 102. Accordingly, a signal sent from the power providing device 102 should, ideally, be sent in the opposite direction as the sync signal was received in order to travel on the same propagation path, but in the opposite direction. Due to echoing or reflection of the sync signal off of objects between the portable electronic device 104 and the power providing device 102, in some examples, the direction of reception of the sync signal may not be the straight line direction from the power providing device 102 to the portable electronic device 104. Accordingly, measuring the parameters of reception of the sync signal can be more accurate than a straight line direction between the portable electronic device 104 from the power providing device 102. In an example, the power providing device 102 can authenticate the portable electronic device 104 based on the identification information in the sync signal. If the authentication is successful, a wireless power signal can be provided as described below with respect to block 408. If, however, the authentication is unsuccessful, a wireless power signal may not be provided to the portable electronic device 104.

At block 408, the portable electronic device 104 determines the parameters for sending a beam of wireless power to the portable electronic device 104. The parameters include the magnitude and phase to be applied to each antenna in the antenna array 202 for a wireless power signal. In order to transmit along the same propagation path and in the reverse direction as the received direction of the sync signal, the magnitude and phase for the wireless power signal can be based on the magnitude and phase for the sync signal. In some examples, multiple sync signals may be received from multiple portable electronic devices 104. Accordingly, the power providing device 102 can determine multiple sets of parameters and transmit multiple beams of wireless power concurrently, or over different time periods. In an example, the wireless power signal can comprise a simple sine wave having the same frequency or frequencies as the sync signal. Accordingly, the beam-forming process may not have to take into account signal modulation or other complex signal characteristics, as is common in communication signal beam-forming techniques. In other examples, however, the wireless power signal can also be a communication signal and more complex signal characteristics can be taken into account.

At block 410, the power providing device 102 can send the wireless power signal as a beam directed towards the portable electronic device 104. Using the parameters determined at block 408, a magnitude and phase corresponding to a wireless power signal can be sent to each antenna in the antenna array 202. The combination of the magnitude and phase at each antenna of the antenna array 202 results in a beam-formed wireless power signal sent from the antenna 202 along a propagation path towards the portable electronic device 104.

At block 412, the wireless power signal can be sensed at the antenna 302 of the portable electronic device 104 and converted to operating power for the portable electronic device 104. Upon being sensed by the antenna 302, the power converter 316 can convert the sine wave of the wireless power signal into, for example, a DC voltage. The DC voltage can be provided directly to the system components and/or can be provided to the internal power pack 312 to charge the internal power pack 312. In an example, the transceiver 306 and processor 304 can decode information from the wireless power signal in conjunction with the power converter 316 converting the wireless power signal into a DC voltage.

In an example, the wireless power signal sent by the power providing device can be a narrowband signal having a narrow frequency bandwidth. In another example, the wireless power signal can comprise a wideband signal wherein energy is spread across a plurality of frequencies. Accordingly, in some examples, the antenna array 202 of the power providing device 102 and the antenna 302 of the portable electronic device 104 can be narrowband antennas configured to send a receive narrowband signals. In other examples, the antenna array 202 can be a wideband antenna configured to spread the energy of the wireless power signal across a plurality of frequencies. Similarly, in some examples, the antenna array 302 of the portable electronic device 104 can be a wideband antenna configured to receive the wideband wireless power signal from the power providing device 102. Moreover, the resonant circuit 320 can include multiple LC circuits each tuned to a different frequency to absorb energy from an incoming wideband signal.

In an example, the antenna array 302 is a wideband antenna configured to sense a wide frequency range of ambient signals. For example, in addition to converting the wireless power signal from the power providing device 102 into operating power, the power converter 316 can convert ambient signals that are not necessarily directed toward the portable electronic device 104 into operating power for the portable electronic device 104. For example, the portable electronic device 104 could be configured to implement a system similar to the Nokia Touchstone system in addition to receiving directed power from the power providing device 102.

In an example, the power providing device 102 alternates between sending wireless power signals to a particular portable electronic device 104, and not sending wireless power signals according to a duty cycle. In an example, when not sending wireless power signals, the power providing device 102 may remain silent in order to receive a sync signal according to the TDD technique described above. The power providing device 102 may also remain silent when the portable electronic device 104 and/or any other portable electronic devices 104 are out of range of the power providing device 102. In another example, when not sending wireless power signals the power providing device 102 may transmit communication signals.

In an example, the power providing device 102 can periodically send a beacon signal to the portable electronic device 104, and the duty cycle between sending wireless power and not sending wireless power can be based on a received power level of the sync signal. Accordingly, when the power level of the sync signal is lower than a previously received sync signal, the duty cycle can be adjusted such that the wireless power signal is transmitted for a smaller percentage of the time (or alternatively, the wireless power signal can be transmitted for a larger percentage of the time in response to a lower sync signal). Correspondingly, when the power level of the sync signal is higher than a previously received sync signal, the duty cycle can be adjusted such that the wireless power signal is transmitted for a larger percentage of time (or alternatively, the wireless power signal can be transmitted for a smaller percentage of time in response to a larger sync signal). In these examples, whether the wireless power signal is transmitted for smaller or larger percentage of time depends on the meaning applied to a lower or higher sync signal. Accordingly, the amount of wireless power provided can be adjusted based on the amount of power received by the portable electronic device 104. When the portable electronic device 104 is farther away from, or has otherwise worse reception, the power signals can be reduced in order to reduce wasted power. When the portable electronic device 104 is closer, or in a better reception area, more power signals can be provided.

In another example, the duty cycle can be adjusted when no sync signal is received from the portable electronic device 104. When a beacon signal is sent out and no sync signal is received in response, the power providing device 102 can back off (e.g., according to an exponential curve) the percentage of time that a wireless power signal is provided. After a threshold number of beacon signals without receiving a sync signal in return, the wireless power signal to the portable electronic device 104 can be stopped completely. Accordingly, the percentage of time that a wireless power signal is provided can be reduced over time until no wireless power signal is provided. Notably, the back off process after no sync signal is received can be incorporated with the above mentioned process of decreasing the power signals based on the power level of a received sync signal. In other examples, the duty cycle can remain constant until no sync signal is received, at which time the back off procedure can commence.

Even when no wireless signals are being provided, however, the power providing device 102 can continue to search for portable electronic devices 104 within range by periodically sending out a beacon signal. Once a sync signal is received, the power providing device 102 can provide a wireless power signal as described above. Thus, wireless power can be provided to the portable electronic device 104 automatically when the portable electronic device 104 is within range of the power providing device 102, yet power can be conserved by reducing power consumption when the portable electronic device 104 is out of range. Additionally, in examples where the portable electronic device 104 can harvest power from ambient signals, the portable electronic device 104 can absorb low power when out of range of the power providing device 102, while absorbing comparatively higher power from the power providing device 102 while in range. The antenna array 202 can also facilitate a three dimensional beam with the ability to guide the beam up, down, left, or right. Since the beam is not limited to near field applications, the antenna of the portable electronic device 104 can have a pattern optimized to receive power when the portable electronic device 104 is used in a typical mobile user application. Such an application can include a belt worn, pocket, or purse held portable electronic device 104, which may be more efficiently charged while moving about with the user.

As mentioned above, the power providing device 102 can be configured as an access point (e.g., according to an 802.11 standard) for providing communication signals as well as wireless power signals. Here, when a signal is not intended for wireless power transfer (e.g., intended solely for communication) the power providing device 102 can transmit the signal at one or more lower power levels. Signals intended for wireless power transfer can be sent at a higher power level. Accordingly, the power level of a signal intended for wireless power transfer can be boosted as compared to communication signals.

The power providing device 102 can determine whether a signal is to be used for providing wireless power and set the power level accordingly. In an example, the power providing device 102 can determine that a signal is to be used for wireless power when a portable electronic device 104 requests wireless power to be sent to thereto. Notably, the wireless power signal may have dual purposes and, as such, may be modulated with data as described above while still having a purpose of providing wireless power.

Although TDD beam-forming is described above, other forms of beam-forming can also be used. For example, the portable electronic device 104 can send location information (e.g., global coordinates) to the power providing device 102. The power providing device 102 then computes a direction for the beam based on the location of the portable electronic device 104 relative to the location of the power providing device 102. The subject matter described herein, however, is not limited to any particular method of beam-forming, therefore, other methods of beam-forming can be used.

Implementation of one or more of the examples discussed here may realize one or more advantages, some of which may have been discussed above. The concepts described here can be flexibly implemented in a wide variety of portable electronic devices. The concepts can further be implemented with hardware that adds little to the size or mass of a portable electronic device, considerations that may have particularly importance when the device is a handheld device. The hardware can be built into a portable electronic device or can be coupled to an accessory to be sold separately from the portable electronic device, such as a portable wireless charging device. In addition, one or more examples support enhanced convenience and portability for a user. The user may experience an enhanced choice of options for replenishing the energy stored in a power back, and may never need to use a wired charging device. Aspects discussed herein may also enable pay-to-charge wireless charging stations, allowing for commercialization of wireless charging.

### Example Embodiments

Example 1 includes a method for providing wireless power from a power providing device to a portable electronic device. The method includes transmitting a beacon signal from the power providing device, sensing the beacon signal at an antenna of a portable electronic device, and sending a sync signal from the antenna of the portable electronic device. The sync signal can be generated using energy from the beacon signal. The method also includes sensing the sync signal at the power providing device, determining transmission parameters for forming a beam having a propagation path directed toward the portable electronic device as a function of measured parameters of the sync signal as received by the power providing device. The method further includes transmitting a wireless power signal from the power providing device as a beam using the transmission parameters, wherein the wireless power signal can be used for providing operating power to the portable electronic device.

In Example 2, the subject matter of Example 1 can optionally include sensing the wireless power signal at the portable electronic device, rectifying the wireless power signal to form direct current (DC) power, and using the DC power for one of charging an internal power pack at the portable electronic device and providing operating power to components in the portable electronic device.

In Example 3, the subject matter of Example 2 can optionally include modulating information on the wireless power signal at the power providing device, and demodulating the wireless power signal to obtain the information.

In Example 4, the subject matter of any one of Examples 1-3 can optionally include wherein the beacon signal, the sync signal, and the wireless power signals comprise narrowband signals.

In Example 5, the subject matter of any one of Examples 1-4 can optionally include wherein the beacon signal, the sync signal, and wireless power signal comprise wideband signals using a plurality of frequencies, wherein the beacon signal, the sync signal, and the wireless power signal use the same plurality of frequencies.

In Example 6, the subject matter of any one of Examples 1-5 can optionally include wherein the beacon signal and the sync signal comprise an omni-directional signal.

Example 7 includes a method for providing wireless power from a first device. The method includes alternating between transmitting a power providing signal to a portable electronic device and not transmitting a power providing signal according to a duty cycle. The method also includes adjusting the duty cycle as a function of a power level of a sync signal received from a portable electronic device, wherein when the sync signal is no longer sensed, the duty cycle is adjusted such that the power providing signal is transmitted for a lower percentage of time.

In Example 8, the subject matter of Example 7 can optionally include wherein when the sensed power level of the sync signal reduces, the duty cycle is adjusted such that the power providing signal is transmitted for a lower percentage of time and when the sensed power level of the sync signal increases, the duty cycle is adjusted such that the power providing signal is transmitted for a lower percentage of time.

In Example 9, the subject matter of any one of Examples 7-8 can optionally include wherein the power providing signal is transmitted as a beam to a portable electronic device, and wherein the sync signal is used to determine parameters for forming a beam for a future power providing signal.

In Example 10, the subject matter of any one of Examples 7-9 can optionally include wherein the duty cycle is adjusted such that a percentage of time that the power providing signal is transmitted is backed off to zero once the sync signal is not received for a period of time.

In Example 11, the subject matter of any one of Examples 7-10 can optionally include periodically transmitting an omni-directional signal to identify any portable electronic devices within range.

In Example 12, the subject matter of any one of Examples 7-11 can optionally include wherein when a sync signal is received from the portable electronic device in response to the omni-directional signal, resuming transmission of the power providing signal to the portable electronic device.

Example 13 includes a method for providing wireless power from a first device. The method includes determining whether a signal is to be used as a power source for a portable electronic device, sending the signal to the portable electronic device at a first power level when the signal is not to be used as a power source, and sending the signal to the portable electronic device at a second power level when the signal is to be used as a power source, wherein the second power level is higher than the first power level.

In Example 14, the subject matter of Example 13 can optionally include receiving a request from the portable electronic device to providing wireless power to the portable electronic device; and determining that the signal is to be used as a power source based on the request.

In Example 15, the subject matter of any one of Examples 13-14 can optionally include modulating information on the signal, and generating the signal according to an IEEE 802.11 standard.

In Example 16, the subject matter of any one of Examples 13-15 can optionally include transmitting the signal as a beam with a propagation path directed toward the portable electronic device.

Example 17 includes a portable electronic device for receiving a wireless power signal. The portable electronic device including an antenna for receiving the wireless power signal transmitted from a charging device, a power converter coupled to the antenna for converting power from the wireless power signal to operating power for electronic circuits associated with the portable electronic device, and a resonator coupled to the antenna for passively providing power for transmitting a return signal from the antenna, the return signal facilitating the charging device to form the charging signal into a beam with a propagation path directed toward the portable electronic device.

In Example 18, the subject matter of Example 17 can optionally include an internal power pack coupled to the antenna for providing wireless power to a plurality of system components. The portable electronic device configured to receive a first signal at the antenna, radiate the return signal from the antenna using the resonator to provide power from the first signal to the antenna for the return signal, receive the wireless power signal at the antenna, and store power received from the wireless power signal in the internal power pack.

Example 19 includes a device for providing wireless power to a portable electronic device. The device includes a processor configured to determine whether a signal is to be used as a power source for the portable electronic device, send the signal to the portable electronic device at a first power level when the signal is not to be used as a power source, and send the signal to the portable electronic device at a second power level when the signal is to be used as a power source, wherein the second power level is higher than the first power level.

In Example 20, the subject matter of Example 19 can optionally include the processor configured to modulate information on the signal, and generate the signal according to an IEEE 802.11 standard.

In Example 21, the subject matter of any one of Examples 19-20 can optionally include the processor configured to calculate parameters such that the signal is transmitted as a beam directed towards the portable electronic device.

### Additional Notes

The above detailed description includes references to the accompanying drawings, which form a part of the detailed description. The drawings show, by way of illustration, specific embodiments in which the subject matter herein can be practiced. These embodiments are also referred to herein as "examples." Such examples can include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, the code may be tangibly stored on one or more volatile or non-volatile computer-readable media during execution or at other times. These computer-readable media may include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description, with each claim standing on its own as a separate embodiment. The scope of the subject matter should be determined with reference to the appended claims, along with the full scope of equivalents to which such claims are entitled.

## Claims

1. A method for providing wireless power from a power providing device to a portable electronic device, the method comprising:
transmitting a beacon signal from the power providing device;
sensing the beacon signal at an antenna of the portable electronic device;
sending a sync signal from the antenna of the portable electronic device, the sync signal generated using energy from the beacon signal;
sensing the sync signal at the power providing device;
determining transmission parameters for forming a beam having a propagation path directed toward the portable electronic device as function of measured parameters of the sync signal as received by the power providing device; and
transmitting a wireless power signal from the power providing device as a beam using the transmission parameters, the wireless power signal for providing operating power to the portable electronic device.

2. The method of claim 1, comprising:
sensing the wireless power signal at the portable electronic device;
rectifying the wireless power signal to form direct current (DC) power;
using the DC power for one of charging an internal power pack at the portable electronic device and providing operating power to components in the portable electronic device.

3. The method of claim 2, comprising:
modulating information on the wireless power signal at the power providing device; and
demodulating the wireless power signal to obtain the information.

4. The method of any one of claims 1-3, wherein the beacon signal, the sync signal, and the wireless power signal comprise narrowband signals.

5. The method of any one of claims 1-3, wherein the beacon signal, the sync signal, and the wireless power signal comprise wideband signals using a plurality of frequencies, wherein the beacon signal, the sync signal, and the wireless power signal use the same plurality of frequencies.

6. The method of any one of claims 1-3, wherein the beacon signal and the sync signal comprise an omni-directional signal.

7. A portable electronic device for receiving a wireless power signal, the portable electronic device comprising:
a processor;
a memory circuit communicatively coupled to the processor, the memory circuit including instructions which, when executed by the processor, cause the portable electronic device to:
receive a beacon signal from a power providing device;
send a sync signal in response to the beacon signal; and
receive a wireless power signal from the power providing device transmitted as a beam long a propagation path derived from the sync signal.

8. The portable electronic device of claim 7, wherein the memory circuit includes instructions which cause the portable device further to:
rectifying the wireless power signal to form direct current (DC) power;
using the DC power for one of charging an internal power pack at the portable electronic device and providing operating power to components in the portable electronic device.

9. The portable electronic device of any one of claims 7-8, wherein the memory circuit includes instructions which cause the portable device further to:
demodulate the wireless power signal to obtain information modulated on to the wireless power signal at the power providing device.

10. The portable electronic device of any one of claims 7-9, wherein the beacon signal, the sync signal, and the wireless power signal comprise narrowband signals.

11. The portable electronic device of any one of claims 7-9, wherein the beacon signal, the sync signal, and the wireless power signal comprise wideband signals using a plurality of frequencies, wherein the beacon signal, the sync signal, and the wireless power signal use the same plurality of frequencies.

12. The portable electronic device of any one of claims 7-9, wherein the beacon signal and the sync signal comprise an omni-directional signal.

13. A device for sending a wireless power signal, the device comprising:
an antenna array;
a processor communicatively coupled to the antenna array; and
a memory circuit communicatively coupled to the processor, the memory circuit including instructions which, when executed by the processor, cause the device to:
transmit a beacon signal from the antenna array of the device;
receive a sync signal, in response to the beacon signal, from a portable electronic device;
determine transmission parameters for forming a beam having a propagation path directed toward the portable electronic device as a function of measured parameters of the sync signal as received by the device; and
transmit a wireless power signal from the device as a beam using the transmission parameters, the wireless power signal for providing power to the portable electronic device.

14. The device of claim 13, wherein the memory circuit includes instructions which cause the device to:
determine, from the sync signal received from the portable electronic device, a power level requested by the portable electronic device; and
forming a wireless power signal according to the power level requested by the portable electronic device.

15. The device of any one of claims 13-14, wherein the memory circuit includes instructions which cause the device to modulate data on the wireless power signal.

## Amended claims

### Amended claims in accordance with Rule 137(2) EPC.

**1.** A method (400) for providing wireless power from a power providing device (102) to a portable electronic device (104), the method comprising:
transmitting a beacon signal from the power providing device (402);
sensing the beacon signal at an antenna of the portable electronic device (404);
sending a sync signal from the antenna of the portable electronic device, the sync signal generated using energy from the beacon signal;
sensing the sync signal at the power providing device (406);
determining transmission parameters for forming a beam having a propagation path directed toward the portable electronic device as function of measured parameters of the sync signal as received by the power providing device (408); and
transmitting a wireless power signal from the power providing device as a beam using the transmission parameters, the wireless power signal for providing operating power to the portable electronic device (410).

**2.** The method (400) of claim 1, comprising:
sensing the wireless power signal (412) at the portable electronic device (102);
rectifying the wireless power signal to form direct current (DC) power;
using the DC power for one of charging an internal power pack (312) at the portable electronic device and providing operating power to components in the portable electronic device.

**3.** The method (400) of claim 2, comprising:
modulating information on the wireless power signal at the power providing device (102); and
demodulating the wireless power signal to obtain the information.

**4.** The method (400) of any one of claims 1-3, wherein the beacon signal, the sync signal, and the wireless power signal comprise narrowband signals.

**5.** The method (400) of any one of claims 1-3, wherein the beacon signal, the sync signal, and the wireless power signal comprise wideband signals using a plurality of frequencies, wherein the beacon signal, the sync signal, and the wireless power signal use the same plurality of frequencies.

**6.** The method (400) of any one of claims 1-3, wherein the beacon signal and the sync signal comprise an omni-directional signal.

**7.** A portable electronic device (104) for receiving a wireless power signal, the portable electronic device comprising:
a processor (304);
a memory circuit (308) communicatively coupled to the processor, the memory circuit including instructions (310) which, when executed by the processor, cause the portable electronic device to:
receive a beacon signal from a power providing device (404),
send a sync signal in response to the beacon signal (406); and
receive a wireless power signal from the power providing device transmitted as a beam long a propagation path derived from the sync signal (412).

**8.** The portable electronic device (104) of claim 7, wherein the memory circuit includes instructions (310) which cause the portable device further to:
rectifying the wireless power signal to form direct current (DC) power;
using the DC power for one of charging an internal power pack (312) at the portable electronic device and providing operating power to components in the portable electronic device.

**9.** The portable electronic device (104) of any one of claims 7-8, wherein the memory circuit (308) includes instructions (310) which cause the portable device further to:
demodulate the wireless power signal to obtain information modulated on to the wireless power signal at the power providing device.

**10.** The portable electronic device (104) of any one of claims 7-9, wherein the beacon signal, the sync signal, and the wireless power signal comprise narrowband signals.

**11.** The portable electronic device (104) of any one of claims 7-9, wherein the beacon signal, the sync signal, and the wireless power signal comprise wideband signals using a plurality of frequencies, wherein the beacon signal, the sync signal, and the wireless power signal use the same plurality of frequencies.

**12.** The portable electronic device (104) of any one of claims 7-9, wherein the beacon signal and the sync signal comprise an omni-directional signal.

**13.** A device (102) for sending a wireless power signal, the device comprising:
an antenna array (202);
a processor (204) communicatively coupled to the antenna array; and
a memory circuit (208) communicatively coupled to the processor, the memory circuit including instructions (210) which, when executed by the processor, cause the device to:
transmit a beacon signal from the antenna array of the device (402);
receive a sync signal, in response to the beacon signal, from a portable electronic device (406);
determine transmission parameters for forming a beam having a propagation path directed toward the portable electronic device as a function of measured parameters of the sync signal as received by the device (408); and
transmit a wireless power signal from the device as a beam using the transmission parameters, the wireless power signal for providing power to the portable electronic device (410).

**14.** The device (102) of claim 13, wherein the memory circuit (208) includes instructions (210) which cause the device to:
determine, from the sync signal received from the portable electronic device, a power level requested by the portable electronic device (408); and
forming a wireless power signal according to the power level requested by the portable electronic device.

**15.** The device (102) of any one of claims 13-14, wherein the memory circuit includes instructions which cause the device to modulate data on the wireless power signal.
